# EUROPÄISCHE PATENTSCHRIFT

(11) **EP 3 817 968 B1**
(45) Veröffentlichungstag und Bekanntmachung des Hinweises auf die Patenterteilung: **11.10.2023**
(21) Anmeldenummer: 19734326.2
(22) Anmeldetag: 21.06.2019
(51) Int. Cl.: B62J 1/22, B62J 1/24

(54) **FAHRRADSATTEL SOWIE VERFAHREN ZUR HERSTELLUNG EINES POLSTERELEMENTS FÜR EINEN FAHRRADSATTEL**
BICYCLE SADDLE AND METHOD FOR PRODUCING A PADDING ELEMENT FOR A BICYCLE SADDLE
SELLE DE BICYCLETTE AINSI QUE PROCÉDÉ POUR LA FABRICATION D'UN ÉLÉMENT DE REMBOURRAGE POUR UNE SELLE DE BICYCLETTE

(30) Priorität: 05.07.2018 DE 102018211090
(43) Veröffentlichungstag der Anmeldung: 12.05.2021
(73) Patentinhaber: Ergon International GmbH, 56070 Koblenz (DE)
(72) Erfinder: KRAUSE, Andreas, 56068 Koblenz (DE); ARNOLD, Franc, 56068 Koblenz (DE)
(74) Vertreter: dompatent von Kreisler Selting Werner - Partnerschaft von Patent- und Rechtsanwälten mbB
(86) Internationale Anmeldenummer: PCT/EP2019/066463
(87) Internationale Veröffentlichungsnummer: WO 2020/007621

(56) Entgegenhaltungen:
- US-B1- 6 257 662

## Beschreibung

Die Erfindung betrifft einen Fahrradsattel sowie ein Verfahren zur Herstellung eines Polsterelements für einen Fahrradsattel.

Fahrradsättel sind über ein an einer Unterseite einer Sattelschalte angeordnetes Sattelgestell mit einer Sattelstütze verbunden. Auf der Oberseite der Sattelschale ist ein Sattelpolster zur Dämpfung angeordnet. Das Sattelpolster ist üblicherweise von einer Deckschicht oder einem Überzug bedeckt bzw. überspannt. Zur Verbesserung des Komforts von Fahrradsätteln besteht eine Vielzahl unterschiedlicher Ausgestaltungen von Fahrradsätteln. Beispielsweise sind innerhalb des Sitzpolsters Gelpads zur Verbesserung des Komforts angeordnet. Ebenso ist es bekannt, beispielsweise zwischen dem Sattelgestell und der Sattelschale insbesondere im Bereich der Sattelrückseite Dämpfungselemente vorzusehen. Die unterschiedlichsten Arten von Fahrradsätteln weisen häufig den Nachteil auf, dass der Komfort relativ gering ist und/oder die Sättel ein hohes Gewicht aufweisen.

Aus US 6,257,662 sind Fahrradsättel mit den Merkmalen des Oberbegriffs des Anspruchs 1 bekannt.

Aufgabe der Erfindung ist einen Fahrradsattel mit guten Komforteigenschaften zu schaffen. Ferner ist es Aufgabe der Erfindung ein Verfahren zur Herstellung eines Polsterelements mit verbesserten Komforteigenschaften zu schaffen.

Die Lösung der Aufgabe erfolgt erfindungsgemäß durch einen Fahrradsattel gemäß Anspruch 1 bzw. ein Verfahren zur Herstellung eines Polsterelements gemäß Anspruch 11.

Die erfindungsgemäße Fahrradsattel weist eine Sattelschale auf, wobei mit einer Unterseite der Sattelschale ein Sattelgestell zur Verbindung mit einem Sattelstützrohr vorgesehen ist bzw. ein Sattelgestell mit der Unterseite der Sattelschale verbunden werden kann. An einer Oberseite der Sattelschale ist ein Sattelpolster angeordnet. Das Sattelpolster kann aus einem oder mehreren Polsterelementen bestehen, wobei die unterschiedlichen Polsterelemente unterschiedliche Dämpfungseigenschaften, Reboundeigenschaften und dergleichen aufweisen können. Erfindungsgemäß ist innerhalb des Sattelpolsters mindestens ein Versteifungselement angeordnet. Durch ein derartiges insbesondere nur lokal vorgesehenes Versteifungselement können die Komforteigenschaften des Sattels deutlich verbessert werden. Besonders bevorzugt ist es hierbei, dass das mindestens eine Versteifungselement insbesondere ausschließlich im Sitzbereich des Fahrradsattels angeordnet ist. Somit ist es auf einfache Weise möglich, im Sitzbereich des Sattels, in dem die größten Kräfte und Momente auftreten, eine gute Versteifung zu erreichen. Gleichzeitig ist es möglich, in anderen Bereichen des Sattels insbesondere im mittleren Bereich des Sattels und/oder im Bereich der Sattelspitze vorzugsweise kein Versteifungselement vorzusehen.

Bei einer besonders bevorzugten Weiterbildung der Erfindung weist das Sattelpolster mehrere insbesondere mindestens zwei Polsterelemente auf. Das mindestens eine Versteifungselement kann hierbei zwischen zwei Polsterelementen angeordnet sein, wobei es bevorzugt ist, dass ein unteres Polsterelement mit der Sattelschale verbunden ist, sodann auf der Oberseite dieses unteren Polsterelements des mindestens eine Versteifungselement angeordnet ist und das Versteifungselement sodann von einem oberen Polsterelement bedeckt ist. Die einzelnen Polsterelemente können sich hierbei vollständig oder teilweise überdecken. Bevorzugt ist auch in dieser Ausführungsform die Anordnung des mindestens einen Versteifungselements, insbesondere ausschließlich im Sitzbereich des Fahrradsattels.

Bei einer besonders bevorzugten Ausführungsform ist das mindestens eine Versteifungselement bzw. zumindest eines der Versteifungselemente, wenn mehrere Versteifungselemente vorgesehen sind, innerhalb eines der mehreren Polsterelemente angeordnet. Besonders bevorzugt ist es hierbei, dass das mindestens eine Versteifungselement innerhalb eines unteren Polsterelements angeordnet ist. Das untere Polsterelement ist hierbei dasjenige Polsterelement, das mit einer Oberseite der Sattelschale verbunden ist und auf dessen Oberseite vorzugsweise ein weiteres Polsterelement angeordnet ist. Bei einem mehrlagigen Aufbau von mehr als zwei Polsterelementen ist das untere Polsterelement ein Polsterelement, auf dessen Oberseite zumindest ein weiteres Polsterelement angeordnet ist. So ist beim dreilagigen Aufbau das untere Polsterelement entweder das Polsterelement, das unmittelbar auf der Oberseite der Sattelschale angeordnet ist oder das mittlere der Polsterelemente.

Vorzugsweise überdeckt ein oberes Polsterelement das untere Polsterelement zumindest teilweise. Gegebenenfalls ist eine im Wesentlichen vollflächige Überdeckung vorteilhaft. Insbesondere überdeckt ein oberes Polsterelement das untere Polsterelement um mindestens 80 % der Oberfläche. Vorzugsweise überdeckt das obere Polsterelement das untere Polsterelement zumindest in denjenigen Bereich, in denen das mindestens eine Versteifungselement angeordnet ist. In einer besonders bevorzugten Ausführungsform ist im Sitzbereich des Sattels ein unteres Polsterelement vorgesehen, wobei das mindestens eine Versteifungselement innerhalb dieses unteren Polsterelements angeordnet ist. Die Oberseite dieses unteren Polsterelements ist sodann mit einem weiteren Polsterelement überdeckt.

Das mindestens eine Versteifungselement, das in bevorzugter Ausführungsform im Sitzbereich des Fahrradsattels angeordnet ist, weist quer zur Sattel-Längsrichtung eine Breite auf, die im Wesentlichen der Breite der Sattelschale in diesem Bereich, das heißt im Sitzbereich, entspricht. Die Breite des mindestens einen Versteifungselements entspricht hierbei im Wesentlichen der Breite der Sattelschale, bei einer Abweichung von weniger als +- 20%, insbesondere weniger als +- 10%.

Wie bei bekannten Sättel kann das Sattelpolster in bevorzugter Weiterbildung mit einer Deckschicht oder einem Überzug gedeckt sein, der insbesondere an einer unteren Seite der Sattelschale fixiert ist.

Das mindestens eine Versteifungselement und/oder die Sattelschale sind vorzugsweise aus Kunststoff hergestellt und/oder weisen Kunststoff auf. Besonders bevorzugt ist hierbei die Verwendung von faserverstärktem Kunststoff. Besonders bevorzugt ist die Herstellung des mindestens einen Versteifungselements und/oder der Sattelschale aus Karbon. Vorzugsweise weist die Sattelschale und/oder das mindestens eine Versteifungselement ein Elastizitätsmodul von mindestens 3000 MPa, insbesondere mindestens 4000 MPa und besonders bevorzugt mindestens 6000 MPa auf.

Die einzelnen Polsterelemente des Sattelpolsters können in bevorzugter Ausführungsform aus unterschiedlichen Materialien hergestellt sein, wobei es auch möglich ist, dass das Sattelpolster nur aus einem einzigen Polsterelement hergestellt ist. Bevorzugt ist es, dass zumindest eines der Polsterelemente, insbesondere das untere Polsterelement einen oder mehrere Partikelschäume aufweist, insbesondere aus einem oder mehreren Partikelschäumen hergestellt ist. Besonders bevorzugt ist es, das Sattelpolster, einzelne Polsterelemente und insbesondere das untere Polsterelement aus E-TPU (expandiertes thermoplastisches Polyurethan) herzustellen, wobei das entsprechende Sattelpolster bzw. Polsterelement E-TPU zumindest aufweist.

Besonders geeignet ist hierfür das von der Firma BASF unter dem Produktnamen "Infinergy" hergestellte Material. Verfahren zur Herstellung von TPU sind beispielsweise in EP 692 510, WO 00/44821, EP 11 74 459 und EP 11 74 458 beschrieben. Ferner kann das Sattelpolster bzw. einzelne Polsterelemente aus EVA (Ethylenvinylacetat) hergestellt sein, bzw. EVA aufweist. Ferner können als Materialien EPP (expandiertes Polypropylen) und EPE (expandiertes Polyethylen) verwendet werden. Auch eine Kombination dieser Materialien miteinander oder eine Kombination der Materialien mit anderen Materialien ist möglich, zum Beispiel in einem Mehrschichtaufbau. Insbesondere können auch Mischungen mit Co- oder Terpolymeren eingesetzt werden. Hierdurch können unterschiedliche Dämpfungs- und Bewegungseigenschaften des mindestens einen Polsterelements erzielt werden. Auch ist es möglich, die entsprechenden Materialien in unterschiedlichen Bereichen stärker zu verdichten, so dass hierdurch die Dämpfungs- und Bewegungseigenschaften beeinflusst werden können.

Des Weiteren ist als Material für das mindestens eine Polsterelementein thermoplastischer elastomerer Kugelschaum geeignet. Ein derartiger Schaum wird von der Firma Sekisui unter dem Produktnamen "ELASTIL" angeboten. Dabei handelt es sich insbesondere um einen geschlossenzelligen Schaum. In bevorzugter Ausführungsform weist das mindestens eine Polsterelementerfindungsgemäß einen thermoplastischen elastomeren Kugelschaum wie insbesondere Elastil auf oder ist aus diesem hergestellt. Möglich ist auch eine Kombination mit den anderen beschriebenen, für die Ausbildung des mindestens einen Polsterelementsgeeigneten Materialien.

Ein weiteres gut geeignetes Material zur Ausbildung des mindestens einen Polsterelementsist ein Polyester-basiertes PU-Material. Besonders geeignet ist hierbei das von der Firma BASF unter dem Markennamen "Elastopan" angebotene Material. Vorzugsweise weist das mindestens eine Polsterelement ein derartiges Material auf oder ist aus diesem hergestellt, wobei es wiederum möglich ist, dieses Material mit anderen beschriebenen Materialien zu kombinieren.

Besonders bevorzugt ist es, dass das mindestens eine Polsterelementeinen oder mehrere Partikelschäume aufweist und insbesondere aus einem oder mehreren Partikelschäumen hergestellt ist. Als Grundmaterial sind hierbei E-TPU, EPP, EPS, EPE oder ähnliche Schäume besonders bevorzugt. Partikelschäume bestehen hierbei in der Regel aus kleinen Kügelchen des expandierten Grundmaterials. Diese als Kügelchen oder andere Körper geformten Partikel werden in einem Werkzeug wie einer Form oder dergleichen unter Temperatur, ggf. auch unter Wasserdampf in ihre Endform gebracht. Partikelschäume haben insbesondere den Vorteil, dass sie eine geringe Dichte, eine gute Wärme-/Kälteisolation und gute Dämpfungseigenschaften aufweisen.

Das mindestens eine Polsterelementweist insbesondere in einem Sitzbereich des Sattels ein Elastizitätsmodul von 0,1 bis 10 MPa, insbesondere 0,1 bis 5 MPa und besonders bevorzugt 0,1 bis 1,0 MPa auf. Das besonders bevorzugte Material Infinergy E-TPU weist ein Elastizitätsmodul von 0,1 bis 0,5 MPa auf. Geeignetes Material ist insbesondere auch TPE (E-Modul: 1,0 bis 2,0 MPa).

Des Weiteren ist es besonders bevorzugt, dass das mindestens eine Polsterelement aufgrund seiner geringen Dichte ein geringes Gewicht aufweist. Insbesondere weist das mindestens eine Polsterelement eine Dichte von weniger als 1 g/cm³, besonders bevorzugt weniger als 0,5 g/cm³, und insbesondere weniger als 0,2 g/cm³ auf. Eines der besonders bevorzugten Materialien, das Material Elastil, weist eine Dichte im Bereich von 0,05 bis 0,2 g/cm³ auf.

Das Reboundverhalten des mindestens einen Polsterelements liegt vorzugsweise im Bereich von vorzugsweise mehr als 30%, insbesondere mehr als 40% und besonders bevorzugt mehr als 50% auf.

Ferner ist es bevorzugt, dass zumindest eines der Polsterelemente als Schaumkörper ausgebildet ist, insbesondere als Schaumkörper hergestellt ist. Besonders geeignet ist hierzu die Herstellung des Polsterelements als PU-Schaum. Hierbei ist es besonders bevorzugt, dass beim Vorsehen mehrerer Polsterelemente das Polsterelement, welches das mindestens eine Versteifungselement aufweist, wie vorstehend beschrieben hergestellt, aus E-TPU, und das mindestens eine weitere Polsterelement als Schaumkörper, insbesondere aus PU-Schaum hergestellt ist.

Bei der Verbesserung der Lagefixierung und Anordnung des mindestens einen Versteifungselements, insbesondere innerhalb eines Polsterelements, ist es bevorzugt, dass das Versteifungselement vorzugsweise mehrere Ausnehmungen aufweist, in die das das mindestens eine Versteifungselement umgebende Material eindringt. Vorzugsweise sind die Ausnehmungen zumindest teilweise als Durchgangsöffnungen ausgebildet.

Des Weiteren betrifft die Erfindung ein Verfahren zur Herstellung eines Polsterelements mit mindestens einem innerhalb des Polsterelements angeorderten Versteifungselement. Insbesondere handelt es sich hierbei um die Herstellung eines Polsterelements für den vorstehend beschriebenen Fahrradsattel, insbesondere für das untere Polsterelement des vorstehend beschriebenen Fahrradsattels.

Zur Herstellung des Polsterelements wird zunächst das mindestens eine Versteifungselement in einer Gussform bzw. Herstellungsform angeordnet. Die Anordnung in der Form erfolgt derart, dass das mindestens eine Versteifungselement in einem Abstand zu Innenseiten der Form angeordnet ist. Insbesondere ist das mindestens eine Versteifungselement zu Innenseiten der Gussform, die eine Oberseite und eine Unterseite des Polsterelements ausbilden, in einem Abstand angeordnet. Besonders bevorzugt ist es, dass das mindestens eine Versteifungselement zu allen Innenseiten in einem Abstand angeordnet ist, so dass das mindestens eine Versteifungselement bei hergestelltem Polsterelement vollständig innerhalb des Polsterelements angeordnet bzw. vollständig vom Polstermaterial umgeben ist.

Im nächsten Schritt erfolgt ein Auffüllen der Gussform mit Material. Je nach verwendetem Polstermaterial kann das entsprechende Polstermaterial eingespritzt werden. Das Material schäumt dann beispielsweise bei Verwendung von PU-Schaum oder dergleichen innerhalb der Form auf bzw. füllt den durch die Form gebildeteten Hohlraum mit Schaum aus. Bei der bevorzugten Herstellung des Polsterelements aus E-TPU werden die entsprechenden Kügelchen in den Hohlraum der Form eingefügt und sodann mittels Wärme, Druck und ggf. Wasserdampf verschmolzen. Hier ist die Verwendung eines Versteifungselements mit Ausnehmungen und insbesondere Durchgangsöffnungen besonders bevorzugt, da der zur Herstellung zugefügte Wasserdampf somit zuverlässig in alle Bereiche der Form gelangt.

Bevorzugt ist es, dass das mindestens eine Versteifungselement mittels Halteelementen in der Form angeordnet wird. Die Halteelemente dienen hierbei insbesondere dazu die Position des mindestens einen Versteifungselements zu definieren und beispielsweise ein Verrutschen oder Verschieben während des Herstellungsprozesses zu vermeiden. Des Weiteren dienen die Halteelemente vorzugsweise dazu, das mindestens eine Versteifungselement in dem gewünschten Abstand zu Innenseiten der Gussform bzw. der Herstellungsform zu halten.

Vorzugsweise weist die Form mehrere Formhälften, insbesondere zwei Formhälften auf. Eine erste Formhälfte ist hierbei vorzugsweise mit ersten Halteelementen verbunden, wobei die Halteelemente fest mit der ersten Formhälfte verbunden sein können. Im nächsten, bevorzugten Verfahrensschritt wird somit das mindestens eine Versteifungselement auf bzw. an den ersten Halteelementen angeordnet.

Anschließend erfolgt ein Schließen der Form und Befüllen der Form mit Polstermaterial.

Bei einer bevorzugten Weiterbildung sind mit der zweiten Formhälfte oder mit weiteren Formteilen der Gussform zwei Haltelemente verbunden. Diese dienen zur Verbesserung der Lagedefinition des mindestens einen Verbindungselements innerhalb der Form. Insbesondere wirken die ersten und zweiten Halteelemente paarweise zusammen.

Nachfolgend wird die Erfindung anhand bevorzugter Ausführungsformen unter Bezugnahme auf die anliegenden Zeichnungen näher erläutert. Es zeigen:
- Fig. 1: eine schematische Draufsicht eines Fahrradsattels,
- Fig. 2: eine schematische Schnittansicht entlang der Linie II-II in Figur 1 einer ersten Form des Fahrradsattels,
- Fig. 3: eine schematische Schnittansicht entlang der Linie III-III in Figur 2,
- Fig. 4: eine schematische Darstellung eines Ausschnitts einer Herstellungsform zur Herstellung eines Polsterlements mit innerhalb des Polsterlements angeordnetem Versteifungselement,
- Fig. 5: einen schematischen Längsschnitt eines Fahrradsattels, einer zweiten bevorzugten Ausführungsform und
- Fig. 6: eine schematische Schnittansicht entlang der Linie VI-VI in Fig. 5.

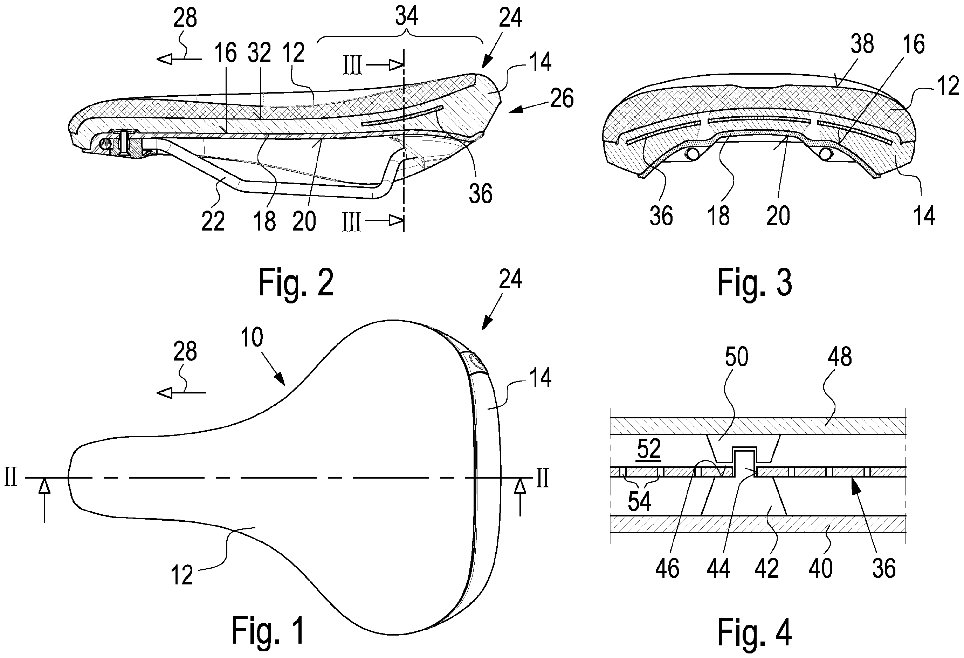

Ein Fahrradsattel (Fig. 1) weist unter einer Deckschicht ein Sattelpolster 10 auf, das im dargestellten Ausführungsbeispiel aus zwei Polsterelementen 12, 14 zusammengesetzt ist. Das untere Polsterelement 14 ist mit der Oberseite 16 einer Sattelschale 18 (Fig. 2) verbunden. Mit einer Unterseite 20 der Sattelschale 18 ist ein Sattelgestell 22 zur Verbindung des Fahrradsattels mit einem Sattelrohr verbunden. In der dargestellten Ausführungsform ist das untere Polsterelement 14 in einem hinteren Randbereich 24 von oben sowie von der Rückseite (Pfeil 26) sichtbar.

Das Sattelpolster kann an seiner Oberseite eine sich in Längsrichtung 28 des Sattels erstreckende Vertiefung zur Entlastung des Genitalbereichs aufweisen.

Im dargestellten Ausführungsbeispiel ist auf einer Oberseite 32 (Fig. 2) das obere Polsterelement 12 des Sattelpolsters 10 angeordnet. Die Verbindung kann hierbei durch Vorsehen eines Haftvermittlers, einer Zwischenschicht oder dergleichen erfolgen.

In einem Sitzbereich 34 des Fahrradsattels ist im dargestellten Ausführungsbeispiel gemäß Fig. 2 und 3 innerhalb des unteren Polsterelements 14 ein Versteifungselement 36 angeordnet. Im dargestellten Ausführungsbeispiel ist das Versteifungselement 36 ausschließlich im Sitzbereich 34 des Fahrradsattels angeordnet. Das Versteifungselement 36 erstreckt sich in seiner Breite quer zur Sattellängsrichtung 28 im Wesentlichen über die gesamte Breite der Sattelschale 18 (Fig. 3).

Das Versteifungselement 36 ist vorzugsweise bezogen auf eine Oberseite 16 der Sattelschale 18 derart angeordnet, dass sich entgegen der Sattellängsrichtung 28 der Abstand des Versteifungselements 36 zur Oberseite 16 der Sattelschale 18 vergrößert (Fig. 2). Bezogen auf die Oberseite 16 der Sattelschale 18 ist das Versteifungselement 36 somit entgegen der Sattel- Längsrichtung 28 ansteigend angeordnet. Des Weiteren kann das Versteifungselement 36 leicht gekrümmt ausgebildet sein, wobei die Krümmung bezogen auf die Oberseite 16 der Sattelschale 18 konvex, d. h. nach oben ausgebildet ist.

Auch in Rückansicht (Fig. 3) kann das Versteifungselement 36 vorzugsweise gebogen ausgebildet sein. Hierbei ist die Krümmungsrichtung entsprechend der Oberseite 38 des oberen Polsterelements 12 ausgebildet und folgt somit ferner auch der Krümmung der Sattelschale 18.

Die Herstellung des unteren Polsterelements 14 insbesondere unter Bezugnahme auf die Figur 4 wird nachstehend näher erläutert:

Zur Herstellung des unteren Polsterelements 14 mit innerhalb des Polsterelements angeordnetem Versteifungselement 36 ist zunächst eine erste Formhälfte 40 vorgesehen, an deren Innenseite erste Halteelemente 42 angeordnet bzw. befestigt sind. Zur Herstellung des unteren Polsterelements 14 wird zunächst auf die insbesondere mehreren ersten Halteelemente 42 das Versteifungselement aufgelegt. Hierzu weist das Versteifungselement 36 Durchgangsöffnungen 44 auf, die jeweils mit Ansätzen der ersten Halteelementen 42 zusammenwirken, so dass das Versteifungselement 36 auf insbesondere ringförmig ausgebildeten Auflageflächen 46 der ersten Halteelemente 42 aufliegt. Im nächsten Schritt wird die Form mittels einer zweiten Formhälfte 48 geschlossen. Mit der zweiten Formhälfte 48 sind insbesondere mehrere zweite Halteelemente 50 verbunden. Die zweiten Halteelemente 50 wirken paarweise jeweils mit den ersten Halteelementen 42 zusammen. Zur Aufnahme des stiftförmigen Ansatzes des ersten Halteelements 42 weist das zweite Halteelement eine entsprechende Öffnung auf.

Im nächsten Schritt kann in die nunmehr geschlossene Form zur Ausbildung des insbesondere unteren Polsterelements 14 Polstermaterial zugeführt werden. Bei der Herstellung des unteren Polsterelements 14 aus E-TPU erfolgt ein Zuführen des kugelförmigen Rohmaterials in den das Versteifungselement 46 umgebenden Hohlraum 52. Hierdurch sind entsprechende Kügelchen auf beiden Seiten des Versteifungselements 36 angeordnet. Anschließend erfolgt insbesondere ein Zuführen von Temperatur und Dampf, so dass die Kügelchen verschmelzen. Aufgrund der in dem Versteifungselement 36 vorgesehenen Durchgangsöffnungen 54 verteilt sich der Dampf insbesondere in dem gesamten Hohlraum 52, so dass das gesamte Material expandiert. Ein Teil des Materials dringt hierbei auch in die Durchgangsöffnungen 54 ein. Die Lage des Versteifungselements 36 ist somit innerhalb des unteren Polsterelements 14 klar definiert.

Im nächsten Schritt werden die beiden Formhälften 40, 48 voneinander getrennt, so dass das fertige untere Polsterelement 14 zusammen mit dem darin integrierten Versteifungselement 36 aus der Form entnommen werden kann. Insbesondere werden hierzu auch die beiden Halteelemente 42, 50 wieder auseinandergezogen, so dass eine Öffnung im unteren Polsterelement 14 verbleibt.

Die hieran anschließende Herstellung des Fahrradsattels erfolgt nach bekanntem Verfahren. Beispielsweise kann in eine Form zunächst durch Vakuum die Deckschicht in die Form eingelegt und angeordnet werden. Anschließend erfolgt beispielsweise ein Verschließen der Form und Einspritzen von Polstermaterial zur Herstellung des oberen Polsterelements 14. Die Form wird sodann geöffnet und das Polsterelement 12 wird über einen Haftvermittler mit dem Polsterelement 14 verbunden. Ebenso kann eine entsprechende Verbindung mit der Sattelschale 18 erfolgen. Die Verbindung der Sattelschale 18 mit dem unteren Polsterelement 14 kann jedoch auch bereits bei der Herstellung des unteren Polsterelements 14 in einem gemeinsamen Herstellungsverfahren oder einer gemeinsamen Form erfolgen. Auch kann die Sattelschale 18 ggf. zusammen mit diesem bereits verbundenen unteren Polsterelement 14 in die Form eingelegt werden, in der sodann das obere Polsterelement 12 hergestellt wird, so dass eine unmittelbare Verbindung zwischen den beiden Polsterelementen erfolgt. Auch hier ist es möglich, die Oberseite des unteren Polsterelements 14 an der nach der Herstellung das obere Polsterelement anliegt, vor der Herstellung das obere Polsterelement 12 mit dem Haftvermittler zu benetzen.

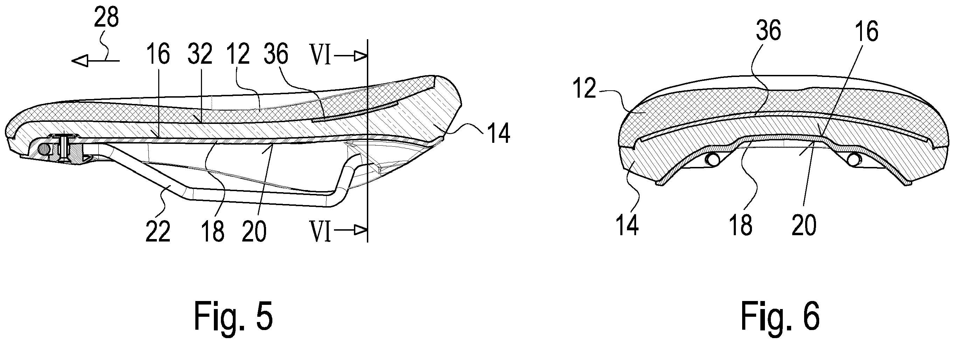

Bei einer zweiten bevorzugten Ausführungsform des Fahrradsattels (Fig. 4 und 6) sind ähnliche und identische Bauteile mit denselben Bezugszeichen gekennzeichnet.

Der Unterschied der beiden Ausführungsformen besteht im Wesentlichen in der Anordnung des mindestens einen Versteifungselements 36. In der in Fig. 5 und 6 dargestellten Ausführungsform der Erfindung ist das Versteifungselement 36 zwischen dem unteren Polsterelement 14 und dem oberen Polsterelement 12 angeordnet. Im Übrigen kann das Versteifungselement identisch ausgebildet sein oder insbesondere auch Durchgangsöffnungen zur besseren Verbindung mit dem oberen Polsterelement und/oder dem unteren Polsterelment 14 aufweisen. Die Herstellung des in den Fig. 5 und 6 dargestellten Sattels ist insofern einfacher, da nach Herstellung eines der beiden Polsterelemente 12, 14 das Versteifungselement 36 auf eine entsprechende Außenseite des Polsterelements gelegt bzw. auf dieser angeordnet werden kann. Es ist nicht erforderlich, das Versteifungselement wie vorstehend insbesondere anhand von Fig. 4 beschrieben derart in einer Form anzuordnen, dass es innerhalb des unteren Polsterelements 14 angeordnet ist.

## Patentansprüche

1. Fahrradsattel mit
einer Sattelschale (18),
einem mit einer Unterseite (20) der Sattelschale (18) verbundenen Sattelgestell (22) und
einem mit einer Oberseite (16) der Sattelschale (18) verbundenen Sattelpolster (12, 14),
wobei
innerhalb des Sattelpolsters (12, 14) mindestens ein Versteifungselement (36) angeordnet ist,
**dadurch gekennzeichnet, dass**
das mindestens eine Versteifungselement (36) eine sich quer zur Sattellängsrichtung (28) erstreckende Breite aufweist, die im Wesentlichen der Breite der Sattelschale (18) in dem entsprechenden Bereich entspricht.

2. Fahrradsattel nach Anspruch 1, **dadurch gekennzeichnet, dass** das mindestens eine Versteifungselement (36) insbesondere ausschließlich in einem Sitzbereich (34) des Fahrradsattels angeordnet ist.

3. Fahrradsattel nach Anspruch 1 oder 2, **dadurch gekennzeichnet, dass** das Sattelpolster (12, 14) mindestens zwei Polsterelemente (12, 14) aufweist und vorzugsweise das mindestens eine Versteifungselement (36) innerhalb eines der Polsterelemente (12, 14) angeordnet ist.

4. Fahrradsattel nach Anspruch 3, **dadurch gekennzeichnet, dass** ein unteres Polsterelement (14) mit der Oberseite (16) der Sattelschale (18) verbunden ist und das mindestens eine Versteifungselement (36) vorzugsweise in diesem Polsterelement (14) angeordnet ist wobei vorzugsweise ein oberes Polsterelement (12) das untere Polsterelement (14) zumindest teilweise überdeckt.

5. Fahrradsattel nach Anspruch 4, **dadurch gekennzeichnet, dass** das obere Polsterelement (12) das untere Polsterelement (14) zumindest in dem Bereich überdeckt, in dem das mindestens eine Versteifungselement (36) angeordnet ist.

6. Fahrradsattel nach einem der Ansprüche 1 - 5, **dadurch gekennzeichnet, dass** das mindestens eine Versteifungselement (36) zwischen den Polsterelementen (12, 14) angeordnet ist.

7. Fahrradsattel nach einem der Ansprüche 1 - 6, **dadurch gekennzeichnet, dass** das mindestens eine Versteifungselement (36) und/oder die Sattelschale (18) aus Kunststoff, insbesondere faserverstärktem Kunststoff hergestellt ist.

8. Fahrradsattel nach einem der Ansprüche 1 - 7, **dadurch gekennzeichnet, dass** zumindest eines der Polsterelemente (12, 14), insbesondere zumindest das untere Polsterelement (14) Partikelschaum aufweist, insbesondere aus Partikelschaum hergestellt ist.

9. Fahrradsattel nach einem der Ansprüche 1 - 8, **dadurch gekennzeichnet, dass** zumindest eines der Polsterelemente (12, 14), insbesondere zumindest das untere Polsterelement (14) E-TPU aufweist, insbesondere aus E-TPU hergestellt ist und/oder dass zumindest eines der Polsterelemente (12, 14) insbesondere das obere Polsterelement (12) als Schaumkörper ausgebildet ist, insbesondere PU aufweist und besonders bevorzugt aus PU hergestellt ist.

10. Fahrradsattel nach einem der Ansprüche 1 - 9, **dadurch gekennzeichnet, dass** das mindestens eine Versteifungselement (36) Ausnehmungen (54), insbesondere Durchgangsöffnungen (54) aufweist.

11. Verfahren zur Herstellung eines Polsterelements (14) mit mindestens einem innerhalb des Polsterelements (14) angeordneten Versteifungselement (36), für einen Fahrradsattel nach einem der Ansprüche 1 - 10, mit den Schritten:
Anordnen des mindestens einen Versteifungselements (36) in einer Form, zumindest mit einem Abstand zu zumindest einer Innerseite der Form, die eine Oberseite und eine Unterseite des Polsterelements (14) ausbildet,
Befüllen der Gussform mit Polstermaterial und
Ausbilden des Polsterelements (14) in der Form insbesondere durch Einbringen von Druck und/oder Temperatur und/oder Dampf.

12. Verfahren nach Anspruch 11, bei welchem das Anordnen des mindestens einen Versteifungselements (36) mittels Halteelementen (42, 50) erfolgt.

13. Verfahren nach Anspruch 12, wobei eine erste Formhälfte (40) der Form mit ersten Halteelementen (42) verbunden ist, auf denen das mindestens eine Versteifungselement (36) angeordnet wird.

14. Verfahren nach Anspruch 13, **dadurch gekennzeichnet, dass** die Form vor dem Befüllen mit Polstermaterial durch eine zweite Formhälfte (48) verschlossen wird.

15. Verfahren nach Anspruch 14, wobei die zweite Formhälfte (18) mit zweiten Halteelementen (50) verbunden ist, die beim Schließen der Form mit den ersten Halteelementen (42), insbesondere paarweise zusammenwirken und zum Fixieren des mindestens einen Versteifungselements (36) dienen.

## Claims

1. A bicycle saddle comprising
a saddle shell (18),
a saddle shell (22) connected to a lower side (20) of the saddle shell (18) and
a saddle cushion (12, 14) connected to an upper side (16) of the saddle shell (18),
wherein
at least one stiffening element (36) is arranged in the saddle cushion (12, 14),
**characterized in that** the at least one stiffening element (36) has a width extending transversely to the longitudinal direction of the saddle (28), the width substantially corresponding to the width of the saddle shell (18) in the corresponding region.

2. The bicycle saddle of claim 1, **characterized in that** the at least one stiffening element (36) is arranged, in particular, exclusively in a seat region (34) of the bicycle saddle.

3. The bicycle saddle of claim 1 or 2, **characterized in that** the saddle cushion (12, 14) comprises at least two cushion elements (12, 14), and preferably the at least one stiffening element (36) is arranged in one of the cushion elements (12, 14).

4. The bicycle saddle of claim 3, **characterized in that** a lower cushion element (14) is connected to the upper side (16) of the saddle shell (18) and the at least one stiffening element (36) is preferably arranged in this cushion element (14), wherein, preferably, an upper cushion element (12) overs the lower cushion element (14) at least partially.

5. The bicycle saddle of claim 4, **characterized in that** the upper cushion element (12) covers the lower cushion element (14) at least **in that** region in which the at least one stiffening element (36) is arranged.

6. The bicycle of one of claims 1-5, **characterized in that** the at least one stiffening element (36) is arranged between the cushion elements (12, 14).

7. The bicycle of one of claims 1-6, **characterized in that** the at least one stiffening element (36) and/or the saddle shell (18) is made of plastic material, in particular fiber-reinforced plastic material.

8. The bicycle of one of claims 1 - 7, **characterized in that** at least one of the cushion elements (12, 14) in particular at least the lower cushion element (14) comprises particle foam, the cushion element in particular being made of particular foam.

9. The bicycle of one of claims 1 - 8, **characterized in that** at least one of the cushion elements (12, 14), in particular at least the lower cushion element (14), comprises E-TPU, in particular is made of E-TPU, and/or **in that** at least one of the cushion elements (12, 14), in particular the upper cushion element (12), is designed as a foam material body, preferably comprises PU and more preferred is made of PU.

10. The bicycle saddle of one of claims 1 - 9, **characterized in that** the at least one stiffening element (36) comprises recesses (54), in particular passage openings (54).

11. A method for producing a cushion element (14) with at least one stiffening element (36) arranged in the cushion element (14), for a bicycle saddle of one of claims 1 - 10, the method comprising the steps of:
arranging the at least one stiffening element (36) in a mold, at least at a distance from at least an inner side of the mold, which forms an upper side and a lower side of the cushion element (14),
filling the mold with cushion material, and
forming the cushion element (14) in the mold, in particular by applying pressure and/or temperature and/or vapor.

12. The method of claim 11, wherein arranging the at least one stiffening element (36) is performed using holder elements (42, 50).

13. The method of claim 12, wherein a first mold half (40) of the mold is connected to first holder elements (42) on which the at least one first stiffening element (36) is arranged.

14. The method of claim 13, **characterized in that** prior to the filling with cushion material, the mold is closed by means of a second mold half (48).

15. The method of claim 14, wherein the second mold half (18) is connected to second holder elements (50) which, upon closing the mold, cooperate, in particular in pairs, with the first holder elements (42) and serve to fix the at least one stiffening element (36).

## Revendications

1. Selle de bicyclette dotée
d'une coque de selle (18),
d'un rail de selle (22) relié à une face inférieure (20) de la coque de selle (18) et
d'un rembourrage de selle (12, 14) relié à une face supérieure (16) de la coque de selle (18),
au moins un élément de renfort (36) étant disposé à l'intérieur du rembourrage de selle (12, 14), **caractérisée en ce que** l'au moins un élément de renfort (36) comporte une largeur transversale à la direction longitudinale de la selle (28) correspondant sensiblement à la largeur de la coque de selle (18) dans la zone correspondante.

2. Selle de bicyclette selon la revendication 1, **caractérisée en ce que** l'au moins un élément de renfort (36) est en particulier exclusivement disposé dans une zone d'assise (34) de la selle de bicyclette.

3. Selle de bicyclette selon la revendication 1 ou 2, **caractérisée en ce que** le rembourrage de selle (12, 14) comporte au moins deux éléments de rembourrage (12, 14) et l'au moins un élément de renfort (36) est de préférence disposé à l'intérieur d'un des éléments de rembourrage (12, 14).

4. Selle de bicyclette selon la revendication 3, **caractérisée en ce qu'**un élément de rembourrage inférieur (14) est relié à la face supérieure (16) de la coque de selle (18) et l'au moins un élément de renfort (36) est de préférence disposé dans cet élément de rembourrage (14), dans lequel de préférence un élément de rembourrage supérieur (12) recouvre au moins partiellement l'élément de rembourrage inférieur (14).

5. Selle de bicyclette selon la revendication 4, **caractérisée en ce que** l'élément de rembourrage supérieur (12) recouvre l'élément de rembourrage inférieur (14) au moins dans la zone où est disposé l'au moins un élément de renfort (36).

6. Selle de bicyclette selon l'une des revendications 1-5, **caractérisée en ce que** l'au moins un élément de renfort (36) est disposé entre les éléments de rembourrage (12, 14).

7. Selle de bicyclette selon l'une des revendications 1-6, **caractérisée en ce que** l'au moins un élément de renfort (36) et/ou la coque de selle (18) est fabriqué(e) en plastique, en particulier en plastique renforcé de fibres.

8. Selle de bicyclette selon l'une des revendications 1-7, **caractérisée en ce qu'**au moins un des éléments de rembourrage (12, 14), en particulier au moins l'élément de rembourrage inférieur (14), comporte de la mousse particulaire et est en particulier fabriqué en mousse particulaire.

9. Selle de bicyclette selon l'une des revendications 1-8, **caractérisée en ce qu'**au moins un des éléments de rembourrage (12, 14), en particulier au moins l'élément de rembourrage inférieur (14), comporte du PUT-E (polyuréthane thermoplastique expansé) et est en particulier fabriqué en PUT-E et/ou **en ce qu'**au moins un des éléments de rembourrage (12, 14), en particulier l'élément de rembourrage supérieur (12), est réalisé comme corps alvéolaire et comporte en particulier du PU et est tout particulièrement fabriqué en PU.

10. Selle de bicyclette selon l'une des revendications 1-9, **caractérisée en ce que** l'au moins un élément de renfort (36) comporte des évidements (54), en particulier des ouvertures de passage (54).

11. Procédé de fabrication d'un élément de rembourrage (14) doté d'au moins un élément de renfort (36) disposé à l'intérieur de l'élément de rembourrage (14) pour une selle de bicyclette selon l'une des revendications 1 - 10, avec les étapes :
disposition de l'au moins un élément de renfort (36) dans une forme, au moins à distance d'au moins une face interne de la forme, laquelle réalise une face supérieure et une face inférieure de l'élément de rembourrage (14),
remplissage de la matrice avec du matériau de rembourrage et
réalisation de l'élément de rembourrage (14) dans la forme en particulier par application de pression et/ou de température et/ou de vapeur.

12. Procédé selon la revendication 11, lors duquel la disposition de l'au moins un élément de renfort (36) s'effectue au moyen d'éléments de maintien (42, 50).

13. Procédé selon la revendication 12, dans lequel une première moitié de forme (40) de la forme est reliée à des premiers éléments de maintien (42), sur lesquels est disposé l'au moins un élément de renfort (36).

14. Procédé selon la revendication 13, **caractérisé en ce que** la forme est, avant d'être remplie de matériau de rembourrage, fermée par une deuxième moitié de forme (48).

15. Procédé selon la revendication 14, dans lequel la deuxième moitié de forme (18) est reliée à des deuxièmes éléments de maintien (50), lesquels coopèrent avec les premiers éléments de maintien (42), en particulier par paires, lors de la fermeture de la forme et servent à fixer l'au moins un élément de renfort (36).
